Europäisches Patentamt

(19) European Patent Office

Office européen des brevets

(11) Numéro de publication : **0 025 741**
**B1**

(12) **FASCICULE DE BREVET EUROPÉEN**

(45) Date de publication du fascicule du brevet :
04.07.84

(21) Numéro de dépôt : 80401249.0

(22) Date de dépôt : 02.09.80

(51) Int. Cl.³ : **G 09 B 5/02, B 43 L 13/18,**
**B 43 L 1/12// G09B11/04**

(54) **Système de communication télévisuelle permettant une création graphique.**

(30) Priorité : 11.09.79 FR 7922653

(43) Date de publication de la demande :
25.03.81 Bulletin 81/12

(45) Mention de la délivrance du brevet :
04.07.84 Bulletin 84/27

(84) Etats contractants désignés :
**AT BE CH DE GB IT LI NL SE**

(56) Documents cités :
**DE-A- 2 330 666**
**FR-A- 2 283 016**
**GB-A- 1 046 725**
**GB-A- 1 172 711**
**US-A- 2 560 658**
**US-A- 3 060 795**
**US-A- 3 837 740**

(73) Titulaire : **Rabeisen, André Joseph Nicolas**
**14, rue Philippe le Hardi**
**F-21000 Dijon (FR)**

(72) Inventeur : **Rabeisen, André Joseph Nicolas**
**14, rue Philippe le Hardi**
**F-21000 Dijon (FR)**

(74) Mandataire : **Laget, Jean-Loup et al**
**Cabinet Pierre Loyer 18, Rue de Mogador**
**F-75009 Paris (FR)**

Jouve, 18, rue St-Denis, 75001 Paris, France

## Description

La présente invention concerne les systèmes permettant une communication télévisuelle.

L'utilisation des systèmes de télévision en circuit fermé est maintenant bien connue. On la retrouve dans de nombreux domaines d'application, tels que conférences, éducation, contrôle de chèques dans les banques, etc.

Toutefois, tous les systèmes existant présentent un même type d'inconvénient, à savoir le caractère immuable de ce qui est transmis par le système. Ainsi, lors d'une conférence ou d'un cours télévisé, le conférencier ou le professeur dispose de documents qui sont placés devant une caméra de télévision et dont l'image est transmise par le système à des récepteurs. Il peut bien entendu, s'agir d'images fixes ou animées, mais ces images correspondent chaque fois à des documents existants.

On connaît déjà un système du type rétroprojecteur, utilisé de façon classique pour l'enseignement et les conférences, comprenant un pupitre formé par une plaque de verre ou autre matériau transparent et sur lequel on peut placer une feuille de papier ou autre support d'écriture, et une caméra de prise de vues placée sous ce pupitre et captant l'image à travers la plaque transparente. On peut ainsi, par exemple à l'aide d'un stylographe ou d'un crayon noir, écrire ou dessiner sur la feuille de papier. Les traces ainsi créées sont, si l'on choisit un papier convenable, par exemple assez mince, captées par la caméra depuis le dessous, et elles peuvent être transmises par le système à des récepteurs. Dans ce cas, seules les traces précitées formant un dessin ou un message apparaissent sur l'écran des récepteurs, à l'exclusion de la main de la personne qui a dessiné ou écrit sur la feuille de papier, du fait du caractère non transparent de celle-ci. Toutefois, si ce système permet une certaine « animation » dans la transmission d'informations ou de données, il est encore lié soit à un document de départ fixe placé sur le pupitre, soit à une animation indépendante.

Il est également connu par le brevet GB-A-1 046 725 de réaliser une création graphique sur un écran constitué de deux feuilles séparées par un produit fluide déplaçable par pression sur la feuille supérieure transparente. Cette feuille reste alors appliquée sur la feuille inférieure colorée et on peut voir à travers la feuille transparente le dessin résultant. Selon ce brevet, il n'est possible de voir le dessin ainsi réalisé que par le dessus, et toute observation de ce dessin en cours d'exécution est gênée par la main de l'opérateur. De plus, on ne peut pas projeter sur cet écran une image fixe à laquelle on puisse proposer des modifications.

Un but de l'invention est de réaliser un système de communication télévisuelle permettant une création graphique directe sur des documents existants.

Il existe également des systèmes comprenant un écran de représentation associé à un ordinateur, permettant d'obtenir à partir de cet ordinateur la représentation de certaines informations sur l'écran parmi des informations mémorisées, et autorisant en outre la modification de ces informations représentées ou affichées, cette modification étant ensuite reprise et mémorisée dans l'ordinateur, mais de tels systèmes d'une part sont coûteux et complexes, et d'autre part exigent de la part de l'utilisateur une formation spéciale.

Un autre but de l'invention est de réaliser un système permettant une création graphique sans devoir utiliser des moyens sophistiqués tels que des ordinateurs du type requis dans les systèmes précités.

L'invention est matérialisée dans un système de communication télévisuelle, du type dans lequel des images sont projetées sur un écran au moyen d'un projecteur, à partir d'un support contenant lesdites images, caractérisé en ce qu'il comporte : un écran de création graphique, présentant une face inférieure transparente de réception des images projetées sous l'écran et une face supérieure semi-transparente sur laquelle on peut porter des informations au moyen d'un instrument de création graphique de sorte que lesdites informations deviennent visibles à travers la face inférieure de réception des images et sont incorporées aux images projetées sous l'écran de façon à constituer des images complétées ; un dispositif opto-électronique de capture des images complétées, dirigé vers la face inférieure de l'écran ; et des ensembles de transmission et éventuellement d'enregistrement et de mémorisation des images complétées, de façon que les images complétées sont captées par le dispositif opto-électronique sous l'écran et transmises et éventuellement enregistrées et mémorisées par les ensembles.

Selon d'autres caractéristiques de l'invention :

— l'écran de création graphique est constitué par une feuille semi-transparente munie sur sa face opposée à la face de réception des images d'une couche photo-sensible ;

— le système de communication télévisuelle comporte un équipement de création graphique comprenant deux glaces transparentes de préférence anti-reflets, maintenues écartées l'une de l'autre ou pouvant être écartées l'une de l'autre afin de ménager un intervalle capable de recevoir un objet tridimensionnel, la glace opposée à la direction d'arrivée de l'image faisant partie de l'écran de création graphique ou supportant cet écran, de sorte que l'image de cet objet tridimensionnel est intégrée à l'image de création graphique transmise ;

— le projecteur d'images est disposé sous l'écran, dont la face de réception des images est ainsi dirigée vers le bas, sa face semi-transparente sur laquelle on peut porter des données ou informations étant dirigée vers le haut ;

— les moyens de projection sont constitués par un projecteur cinématographique, un projecteur de diapositives, un magnétoscope, un appareil vidéodisque, un épidiascope ou un moyen équivalent ;

— un miroir tel qu'un miroir dichroïque, incliné par rapport au plan de l'écran, est interposé dans le trajet des rayons lumineux entre les moyens de projection et cet écran, pour renvoyer l'image de l'écran latéralement vers les moyens de capture d'images ;

— le système de capture des images est constitué par une caméra de type optique ou électronique, qui est reliée à un appareil enregistrant ou mémorisant les images ainsi captées et/ou à un récepteur tel qu'un récepteur de télévision ;

— le système de capture des images est relié aux moyens de projection d'un ou plusieurs autres systèmes de communication télévisuelle, qui sont ainsi combinés de façon à permettre une création graphique collective ;

— l'écran de création graphique comprend une première feuille transparente, notamment en matière plastique, une seconde feuille semi-transparente également en matière plastique, de couleur différenciée par rapport à celle de la première feuille, et une matière à l'état de particules de type translucide, interposée entre ces deux feuilles et pouvant être refoulée latéralement sous l'effet d'une pression telle que celle exercée à l'aide d'un instrument de création graphique, pour permettre la venue en contact des deux feuilles, en créant des zones différenciées sur la face externe de la feuille transparente.

Le système qui fait l'objet de l'invention permet ainsi à un opérateur, tel qu'un conférencier, un professeur, etc... d'intervenir directement sur une image projetée sur l'écran et de la modifier, les modifications apportées par lui à cette image pouvant être par exemple suivies directement sur un ou plusieurs récepteurs de télévision placés à distance.

On conçoit que les applications d'un tel système, qui permet une création graphique dans un système avec animation, sont multiples, qu'il s'agisse d'enseignement de formation, d'ergonomie, d'animation de groupe, de conférences, de transmissions d'ordre, de graphologie, d'étude de comportement par tests, etc...

Suivant une autre possibilité encore, plusieurs systèmes tels que définis ci-avant peuvent être associés, les moyens de capture des images d'un système étant alors reliés, directement ou non, aux moyens de projection d'un autre système, de sorte que plusieurs personnes peuvent, à distance, apporter des modifications successives à une même image ou à un même groupe d'images, en réalisant ainsi une véritable création collective.

La description qui va suivre, faite en regard des dessins annexés, donnés à titre non limitatif, permettra de mieux comprendre l'invention.

La figure 1 est une vue schématique de l'ensemble d'un système suivant l'invention.

La figure 2 est une vue à plus grande échelle d'un mode de réalisation possible d'écran de création graphique utilisable dans ce système.

La figure 3 est une vue analogue à la Fig. 1 mais se rapportant à une variante.

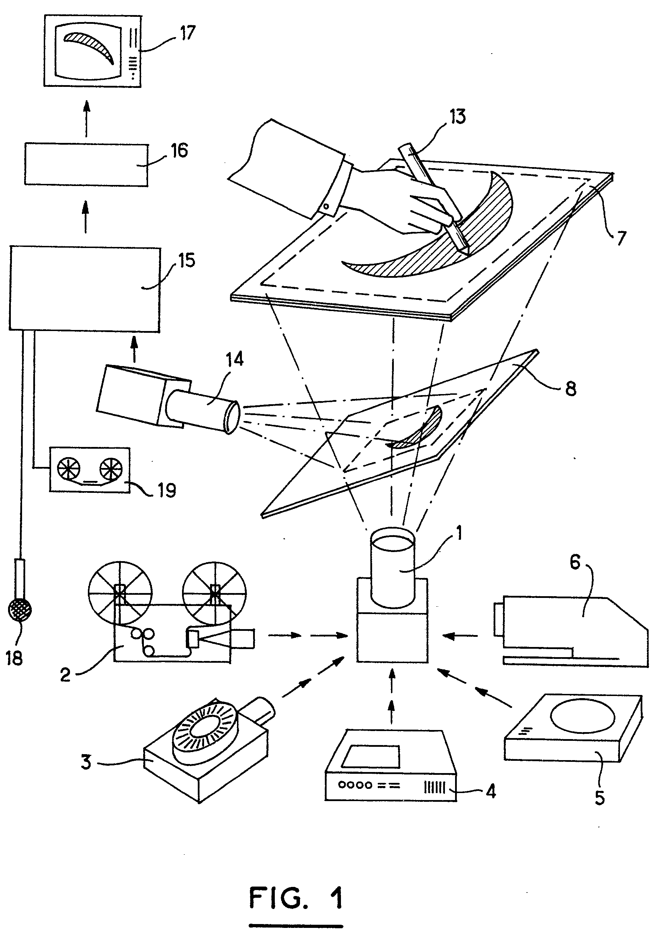

Sur la Fig. 1, on a indiqué schématiquement en 1 un projecteur d'images. On a représenté également de façon schématique, à titre d'exemples, plusieurs types de projecteurs pouvant être prévus dans le système, notamment un projecteur cinématographique 2, un projecteur de diapositives 3, un magnétoscope 4, un appareil vidéodisque 5 et un épidiascope 6.

Le projecteur 1 assure ici une projection sur la face inférieure d'un écran de création graphique 7 qui sera décrit plus loin, à travers un miroir dichroïque 8. Sur la Fig. 1, le projecteur 1 est disposé verticalement au-dessous de l'écran 7, qui est placé horizontalement, pour des raisons de clarté de représentation. Mais il va de soi que cet écran pourrait occuper une position plus ou moins inclinée, notamment pour faciliter l'intervention de l'opérateur. Le projecteur pourrait également occuper lui-même d'autres positions.

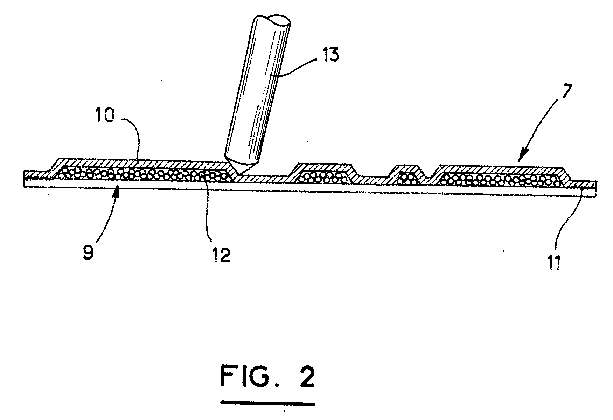

Pour la description du mode de réalisation de l'écran 7 considéré ici, on se reportera à la Fig. 2.

L'écran de création graphique représenté sur cette Fig. 2 comprend une feuille de matière plastique transparente 9 de couleur claire et une feuille de matière plastique semi-transparente noire 10, cette dernière feuille pouvant avoir par exemple un coefficient de transmission de la lumière compris entre 20 et 50 %. Pour des raisons pratiques, un coefficient de 20 % semble constituer une limite inférieure, tandis qu'une valeur de 50 % semble ne pas devoir être dépassée pour des raisons de renvoi d'image. Ces deux feuilles 9, 10 sont réunies par soudage sur le pourtour de l'écran comme indiqué en 11. Plusieurs couches de particules de matière blanche translucide sont disposées entre les deux feuilles, comme indiqué en 12. Ces particules peuvent être constituées par exemple par des particules de craie, de talc ou de matière analogue, d'une granulométrie moyenne comprise par exemple entre 10 et 100 microns, et elles ont judicieusement une forme générale sphérique pour faciliter leur déplacement relatif comme indiqué plus loin.

Dans la condition de repos de cet écran 7, c'est-à-dire lorsque les deux feuilles sont écartées l'une de l'autre, l'image projetée sur l'écran par le projecteur 1 est renvoyée selon un pourcentage qui est fonction de la semi-transparence de la feuille noire 10, par exemple à 80 % pour une feuille semi-transparente à 20 %. La fraction restante de la lumière formant l'image traverse l'écran, de sorte que cette image est visible pour un opérateur observant l'écran depuis le dessus.

Si l'opérateur désire intervenir sur l'image apparaissant sur l'écran pour la modifier, il appuie alors à l'aide d'un instrument tel qu'une pointe 13, comme montré sur la Fig. 2, sur la feuille semi-transparente supérieure 10, laquelle est ainsi amenée en contact avec la feuille inférieure 9 par écartement des particules formant la couche intercalaire 11. Ainsi, une zone noire correspondant à la zone de contact entre les feuilles apparaît sur la face inférieure de l'écran 7. Plusieurs zones ou parties ont été ainsi formées au moyen de l'instrument 13 sur la Fig. 2. Les feuilles 9 et 10 demeurent alors accolées sous l'effet de l'électricité statique. On conçoit que, si l'on regarde l'écran depuis le dessous, on voit l'image projetée sur cet écran, qui est renvoyée par exemple à 80 % modifiée par les parties ou zones noires ainsi produites par l'opérateur, de sorte qu'il en résulte une modification de l'image précitée, correspondant à une véritable création graphique.

La correction ou modification désirée de l'image projetée sur l'écran est aisée pour l'opérateur, par exemple pour le conférencier, qui voit l'image depuis le dessus de l'écran par transparence, bien que de façon atténuée, et la correction ou modification ainsi apportée par lui apparaît sur la face inférieure de l'écran pour être exploitée comme indiqué plus loin ; en outre elle est bien visible pour l'opérateur. Toutefois, ni l'instrument 13, ni la main de l'opérateur ne sont visibles depuis le dessous de l'écran en raison du caractère semi-transparent de la feuille supérieure 10.

Si l'on se reporte à nouveau à la Fig. 1, on voit qu'on a montré schématiquement en 14 un système de capture d'images, qui peut être de type optique ou électronique. Ce système reprend les images apparaissant sur la face inférieure de l'écran 7, qui lui sont renvoyées par le miroir dichroïque 8.

Le système de capture d'images 14 peut être relié à un ensemble transmetteur et transformateur d'informations indiqué schématiquement en 15, qui convertit les images reçues en informations, lesquelles peuvent être par exemple mémorisées dans un magnétoscope 16 et transmises à un récepteur de télévision 17 pour la reproduction des images.

Il va de soi que ces moyens de capture d'images ou de prise de vues et ceux prévus pour leur exploitation sont bien connus dans cette technique et peuvent être de type quelconque.

On a montré également de façon schématique en 18 et 19 un microphone et un magnétophone, qui sont reliés au système 15 pour fournir par exemple au récepteur de télévision 17 un commentaire associé aux images reçues.

Le mode d'utilisation du système qui fait l'objet de l'invention est le suivant :

On supposera qu'un conférencier placé près du système désire faire un exposé avec projection à des auditeurs placés à distance et se tenant devant des récepteurs de télévision 17.

Comme indiqué précédemment, le projecteur 1, qui peut être de l'un des types indiqués, projette sur la face inférieure de l'écran 7 une ou plusieurs images, qui peuvent être commentées par le conférencier. Ces images sont vues à la fois par le conférencier depuis le dessus de l'écran 7, et par le système opto-électronique 14, par renvoi par le miroir dichroïque 8. elles sont ensuite transmises d'une façon en soi classique pour leur réception sur les récepteurs 17.

Si le conférencier désire intervenir sur une ou plusieurs images, il appui avec son instrument de création graphique 13 sur la feuille supérieure 10 de l'écran 7, de manière à repousser latéralement les particules de matière translucide 11 et à amener cette feuille supérieure 10 en contact avec la feuille inférieure transparente 9, les deux feuilles restant alors accolées par électricité statique. Etant donné que la feuille supérieure 10 de l'écran est noire, une trace noire correspondante va apparaître sur la face inférieure de l'écran 7 et va être visible pour le système 14, de sorte que l'image ainsi modifiée va être transmise aux récepteurs 17 et reçue par les auditeurs. Le conférencier peut ainsi, à volonté, modifier les images reçues du projecteur, pour fournir par exemple des explications sur le sujet traité, apporter des changements à une structure, compléter des graphiques ou tableaux, etc... La main du conférencier et l'instrument 13 demeurent invisibles depuis le dessous de l'écran pour le système 14, comme indiqué précédemment, et ne sont donc pas visibles non plus sur les écrans des récepteurs de télévision 17. Il en résulte une véritable animation des images projetées, avec les multiples possibilités d'intervention qui en découlent.

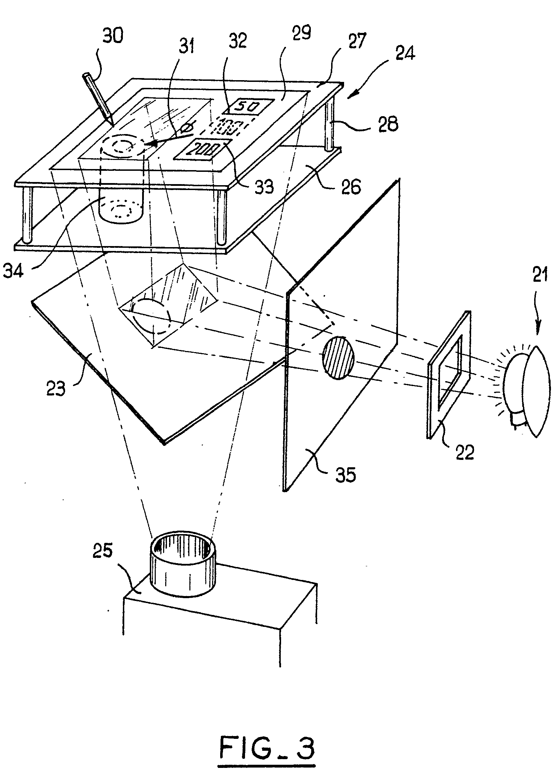

Sur la Fig. 3, on a indiqué en 21 une source de lumière, qui assure ici une projection à travers une diapositive 22, étant entendu toutefois que l'un quelconque des moyens de projection d'images visés ci-avant serait également utilisable dans le cas présent. L'image de la diapositive 22 est projetée sur un miroir semi-réfléchissant 23, qui la renvoie vers un équipement de création graphique indiqué de façon générale en 24. On a indiqué en 25 un appareil de reprise d'image qui peut être une caméra optique, électronique, ou tout autre système approprié.

Suivant le mode de réalisation considéré ici, l'équipement de création graphique comprend deux glaces transparentes anti-reflets 26, 27, qui sont maintenues écartées l'une de l'autre par des colonnettes 28.

La glace supérieure 27 sert de support à une feuille de papier semi-transparente 29, telle qu'une feuille de papier « pelure », muni sur sa face supérieure, opposée à la glace 27, d'une couche photo-sensible de type classique. Du fait du caractère semi-transparent de cette feuille 29, seul ce qui apparaît sur sa face inférieure en contact avec la glace 27 est visible pour la caméra 25. Ainsi, si un opérateur trace, par exemple à l'aide d'un feutre de couleur indiqué en 30, un motif quelconque sur la face supérieure de la feuille, ni ce feutre, ni la main du dessinateur ne seront visibles pour la caméra 25, de sorte qu'ils n'apparaîtront pas sur l'image transmise. Par contre, un tracé tel que celui indiqué en 31, réalisé à l'aide d'un tel feutre en une couleur différenciée par rapport à la feuille de papier 29 apparaîtra sur la face inférieure de la feuille de papier semi-transparente et sera ainsi rendu visible pour la caméra 25 et sur l'image transmise, en complétant ou modifiant l'image initialement reçue.

Ce caractère semi-transparent de la feuille 29 permet également, en ménageant dans cette feuille deux fentes parallèles comme indiqué en 32 sur le dessin, de manière à constituer une glissière, l'insertion dans cette dernière d'un support d'inscriptions ou autres indiqué en 33. La partie de ce support glissant sous la feuille 29 est alors visible sur l'image captée tandis que l'autre partie, cachée par la feuille, n'apparaît pas sur cette image par suite de l'opacité suffisante de cette feuille. Ces inscriptions du support viennent alors également compléter l'image initialement reçue à partir de la diapositive.

On a montré en 34 sur le dessin un objet tridimensionnel qui a été placé dans l'intervalle ménagé entre les deux glaces 26 et 27. On conçoit aisément que l'image de cet objet 34 interposé dans le trajet des rayons lumineux va également apparaître sur l'image captée par la caméra 25 et va ainsi être intégrée à la création graphique.

On conçoit que le système ainsi réalisé se prête à de nombreuses possibilités. Ainsi, on a montré en 35 un cache qui peut être interposé dans le trajet optique, pour éliminer une partie de l'image projetée sur l'équipement de création graphique 24, par exemple au profit d'un objet tridimensionnel ou de toute autre projection ou adjonction graphique. L'image finale peut ainsi être le résultat de toute combinaison, adjonction, soustraction, correction etc... désirée, et elle est d'une part transmise à distance pour sa visualisation et d'autre part conservée sous forme de trace écrite par suite du caractère photo-sensible de la feuille 29.

Des modifications peuvent être apportées aux modes de réalisation décrits dans le domaine des équivalences techniques, sans s'écarter de l'invention. Ainsi, comme indiqué précédemment, on comprendra que l'écran peut être d'un type différent de celui décrit, et notamment d'un type permettant la création de traits ou zones de couleur différenciée par des moyens électroniques ou équivalents.

Suivant une autre variante, le ou les récepteurs de télévision pourraient également être remplacés par un écran d'un système analogue à celui décrit. Dans ce cas, l'opérateur observant cet écran pourra également intervenir sur l'image qu'il reçoit, de la même manière que celle indiquée précédemment, ce qui permet en fait une création graphique collective étant donné que cette intervention sera elle-même portée à la connaissance du premier opérateur.

Enfin, suivant une autre variante encore, des moyens peuvent être prévus pour faire apparaître dans les zones différenciées de l'écran des dessins ou autres images, par des systèmes graphiques ou électroniques. Ceci permet alors de substituer à la représentation figurant initialement dans ces zones, après leur «effacement» par rapprochement des deux feuilles de l'écran, une autre représentation désirée.

## Revendications

1 Système de communication télévisuelle, du type dans lequel des images sont projetées sur un écran au moyen d'un projecteur, à partir d'un support contenant lesdites images, caractérisé en ce qu'il comporte : un écran (7) de création graphique, présentant une face inférieure transparente (9) de réception des images projetées sous l'écran (7) et une face supérieure (10) semi-transparente sur laquelle on peut porter des informations au moyen d'un instrument (13) de création graphique de sorte que lesdites informations deviennent visibles à travers la face inférieure (9) de réception des images et sont incorporées aux images projetées sous l'écran (7) de façon à constituer des images complétées ; un dispositif opto-électronique (14) de capture des images complétées, dirigé vers la face inférieure (9) de l'écran (7) ; et des ensembles (15-17) de transmission et éventuellement d'enregistrement et de mémorisation des images complétées, de façon que les images complétées sont captées par le dispositif opto-électronique (14) sous l'écran (7) et transmises et éventuellement enregistrées et mémorisées par les ensembles (15-17).

2. Système suivant la revendication 1, modifié en ce que l'écran de création graphique (7) est constitué par une feuille semi-transparente (29) munie sur sa face opposée à la face de réception des images d'une couche photo-sensible.

3. Système suivant la revendication 1 ou 2, caractérisé par un équipement de création graphique (24) comprenant deux glaces transparentes (26, 27) de préférence anti-reflets, maintenues écartées l'une de l'autre ou pouvant être écartées l'une de l'autre afin de ménager un intervalle capable de recevoir un objet tridimensionnel (34), la glace opposée à la direction d'arrivée de l'image faisant partie de l'écran de création graphique ou supportant cet écran, de sorte que l'image de cet objet tridimensionnel est intégrée à l'image de création graphique transmise.

4. Système suivant l'une quelconque des revendications 1 à 3, caractérisé en ce que le projecteur d'images (1) est disposé sous l'écran (7), dont la face (9) de réception des images est ainsi dirigée vers le bas, sa face semi-transparente (10) sur laquelle on peut porter des données ou informations étant dirigée vers le haut.

5. Système suivant la revendication 4, caractérisé en ce que les moyens de projection (1) sont constitués par un projecteur cinématographique (2), un projecteur de diapositives (3), un magnétoscope (4), un appareil vidéodisque (5), un épidiascope (6) ou un moyen équivalent.

6. Système suivant l'une quelconque des revendications 1 à 5, caractérisé en ce qu'un miroir (8) tel qu'un miroir dichroïque incliné par rapport au plan de l'écran, est interposé dans le trajet des rayons lumineux entre les moyens de projection (1) et cet écran (7), pour renvoyer l'image de l'écran latéralement vers les moyens de capture d'images (14).

7. Système suivant l'une quelconque des revendications 1 à 6, caractérisé en ce que le système de capture des images (14) est constitué par une caméra de type optique ou électronique, qui est reliée à un appareil (16) enregistrant ou mémorisant les images ainsi captées et/ou à un récepteur tel qu'un récepteur de télévision (17).

8. Système suivant l'une quelconque des revendications 1 à 7, caractérisé en ce que le système de capture des images (14) est relié aux moyens de projection d'un ou plusieurs autres systèmes de communication télévisuelle, qui sont ainsi combinés de façon à permettre une création graphique collective.

9. Système suivant la revendication 1, caractérisé en ce que l'écran de création graphique comprend une première feuille transparente (9), notamment en matière plastique, une seconde feuille semi-transparente (10) également en matière plastique, de couleur différenciée par rapport à celle de la première feuille, et une matière à l'état de particules (12) de type translucide, interposée entre ces deux feuilles et pouvant être refoulée latéralement sous l'effet d'une pression, telle que celle exercée à l'aide d'un instrument de création graphique (13), pour permettre la venue en contact des deux feuilles, en créant des zones différenciées sur la face externe de la feuille transparente (9).

**Claims**

1. A television communication system, of the type wherein images are displayed on a screen by means of a projector, starting from a support containing said images, characterized in that it comprises : a graphic creation screen (7) presenting a transparent lower face (9) receiving the images projected under the screen (7) and a semi-transparent upper face (10) upon which data can be entered by means of a graphic creation instrument (13) so that said data become visible across the lower image-receiving face (9) and become blended with the images being projected under the screen (7) in such manner as to constitute completed images ; an opto-electronic device (14) for picking up the completed images, oriented towards the lower face (9) of screen (7) ; and sets (15-17) for transmitting and eventually for recording and memorizing the completed images, in such manner that the completed images may be picked up by the opto-electronic device (14) under the screen (7) and transmitted and eventually recorded and memorized by the sets (15-17).

2. A system according to claim 1 modified in that the graphic creation screen (7) is formed of a semi-transparent sheet (29) provided with a photo-sensitive layer on its face opposite to the image-receiving face.

3. A system according to claim 1 or 2, characterized by a graphic creation equipment (24) comprising two transparent glass panes (26, 27), preferably non-reflecting, held apart from each other or capable of being moved away from each other so as to leave room for an interval in which a tridimensional object (34) may be received, the glass pane opposite the arrival direction of the image forming part of the graphic creation screen or supporting said screen, in such manner that the image of the said tridimensional object becomes integrated into the transmitted graphic creation image.

4. A system according to any of claims 1 to 3, characterized in that the image projector (1) is placed under the screen (7), the image-receiving face (9) of said screen being thus oriented downwards, while its semi-transparent face (10) upon which data can be entered is oriented upwards.

5. A system according to claim 4, characterized in that the projection means (1) consist of a cinematographic projector (2), a slide projector (3), a video recorder (4), a videodisc system (5), an epidiascope (6) or an equivalent means.

6. A system according to any of claims 1 to 5, characterized in that a mirror (8) such as a dichroic mirror inclined relatively to the plane of the screen is interposed across the path of light rays between the projection means (1) and the said screen (7) for reflecting the image of the screen sideways towards the image pick-up means (14).

7. A system according to any of claims 1 to 6, characterized in that the image pick-up system (14) consists in a camera of an optical or electronic type which is connected to an apparatus (16) which records or memorizes the images having thus been picked up and/or to a receiver such as a television receiver (17).

8. A system according to any of claims 1 to 7, characterized in that the image pick-up system (14) is connected to the projection means of one or several other television communication systems which thus become combined so as to allow for a collective graphic creation.

9. A system according to claim 1, characterized in that the graphic creation screen comprises a first transparent sheet (9), particularly a plastic sheet, a second semi-transparent sheet (10), also made of plastic, the colour of which is differentiated from that of the first sheet, and a translucent-type material (12) in a state of particles, interposed between these two sheets and capable of being forced back laterally under the effect of a pressure such as may be exerted with the help of a graphic creation instrument (13) for permitting the two sheets to come into contact, thereby creating differentiated zones on the external face of the transparent sheet (9).

**Ansprüche**

1. Fernsehübertragungssystem, mit welchem Bilder aus einem diese Bilder enthaltenden Träger mittels eines Projektors auf einen Bildschirm projiziert werden, dadurch gekennzeichnet, dasses umfasst : einen Schirm für eine graphische Gestaltung (7) welcher eine durchsichtige untere Fläche (9) zum Empfang von unter dem Schirm (7) projizierten Bildern und eine halbdurchsichtige obere Fläche (10) aufweist, worauf Daten mittels eines Gerätes zur graphischen Gestaltung (13) eingetragen werden können, sodass solche Daten durch die untere Bilderempfransfläche (9) sichtbar werden, und in die unter dem Schirm (7) projizierten Bilder eingegliedert werden, wobei ergänzte Bilder entstehen ; ein optoelektronisches Gerät (14) zur Erfassung der engänzten Bilder, welches bach der unteren Fläche (9) des Bildschirms (7) gerichtet ist ; und Einheiten (15-17) für die Uebertragung bzw. für die Aufzeichnung und Speicherung der engäntzen Bilder, sodass die ergänzten Bilder durch das optoelektronische Gerät (14) unter dem Bildschirm (7) erfasst und übertragen und ggf. durch die Einheiten (15-17) aufgezeichnet und gespeichert werden.

2. System nach Anspruch 1, dadurch gekennzeichnet, dass der Schirm zur graphischen Gestaltung (7) auf einem halbdurchsichtigen Blatt (29) besteht, welches auf seine der Bilderempfangsfläche (9) gegenüberliegende Fläche mit einer lichtempflindlichen Schicht versehen ist.

3. System nach Anspruch 1 oder 2, gekennzeichnet durch eine Vorrichtung zur graphischen Gestaltung (24) welche zwei durchsichtige, vorzugsweise mit Antireflexbelag ausgestattenten Glasscheiben (26, 27) umfasst, wobei diese Scheiben in Abstand voneinander stehen oder voneinander entfernt werden können, um einen Zwischeraum zu schaffen zur Aufnahme eines dreidimensionalen Gegenstandes (34), wobei die der Eintrittsrichtung des Bildes entgegengesetzte Glasscheibe (27) einen Teil des Schirms zur graphischen Gestaltung bildet oder diesen Schirm unterstützt, sodass das Bild dieses dreidimensionalen Gegenstandes dem übertragenen graphisch gestalteten Bild eingegliedert wird.

4. System nach einem der Ansprüche 1 bis 3, dadurch gekennzeichnet, dass der Projektor (1) unter dem Bildschirm (7) angeordnet ist, dessen Bildempfangsfläche (9) zu diesem Zweck nach unter gerichtet ist, wobei seine halbdurchsichtige Fläche (10), auf der Daten eigentragen werden können, nach oben gerichtet ist.

5. System nach Anspruch 4, dadurch gekennzeichnet, dass die Projektionsmittel (1) aus einem Filmprojektor (2), einem Diasprojektor (3), einem Videorecorder (4), einem Bildplattenapparat (5), einem Epidiaskop (6) oder ähnlichen bestehen.

6. System nach einer der Ansprüche 1 bis 5, dadurch gekennzeichnet, dass ein Spiegel (8) wie z. B. ein im Verhältnis zur Ebene des Bildschirms schrägliegender dichroischer Spiegel auf der Strecke der Lichtstrahlen zwischen den Projektionsmitteln (1) und diesem Bildschirm (7) liegt, um das Bild des Schirms seitwärts auf die Bilderfassungsmittel (14) abzulenken.

7. System nach einem der Ansprüche 1 bis 6, dadurch gekennzeichnet, dass das Bildererfassungssystem (14) aus einer optischen der elektronischen Kamera besteht, welche mit einem die von diesem System (14) erfassten Bilder aufnehmenden oder speichernden Apparat (16) und/ oder mit einem Empfänger, z. B. einem Fernsehempfänger (17) verbunden ist.

8. System nach einem der Ansprüche 1 bis 7, dadurch gekennzeichnet, dass das Bildererfassungssystem (14) mit den Projektionsmitteln eines oder mehrere anderen Fernsehübertragungssysteme verbunden ist, wobei diese zusammengeschaltet sind, dergestalt dass eine kollektive graphische Gestaltung ermöglicht wird.

9. System nach Anspruch 1, dadurch gekennzeichnet, dass der Schirm zur graphischen Gestaltung umfasst : ein erstes durchsichtiges Blatt (9), insbesondere aus Kunststoff, ein zweites halbdurchsichtiges Blatt (10) ebenfalls aus Kunststoff, dessen Farbe von der des ersten Blattes differenziert ist, und ein zwischen diesen zwei Blättern liegendes aus Partikeln bestehendes lichtdurchlässiges Material (12) welches unter der Wirkung eines Druckes wie eines Mittels eines Gerätes zur graphischen Gestaltung (13) ausgeübten Druckes, seitwärts geschoben werden kann, um das Inberührungkommen der zwei Blättern zu ermöglichen, wobei differenzierte Bereiche auf der Aussenfläche des Durchsichtigen Blatts (9) gebildet werden.

**FIG. 1**

# FIG. 2

FIG_3